# EUROPÄISCHE PATENTSCHRIFT

(11) **EP 0 379 074 B1**
(45) Veröffentlichungstag und Bekanntmachung des Hinweises auf die Patenterteilung: **12.01.1994**
(21) Anmeldenummer: 90100579.3
(22) Anmeldetag: 12.01.1990
(51) Int. Cl.: F02P 5/04

(54) **Verfahren zum Betreiben einer klopfgeregelten Brennkraftmaschine**
Utilisation process of a knock controlled internal combustion engine
Processus d'exploitation d'un moteur à combustion interne avec régulation du cliquetis

(30) Priorität: 20.01.1989 DE 3901564
(43) Veröffentlichungstag der Anmeldung: 25.07.1990
(73) Patentinhaber: AUDI AG, 85045 Ingolstadt (DE)
(72) Erfinder: Sellner, Hans-Joachim, D-8079 Kipfenberg (DE); Freye, Friedrich, Dipl.-Ing., D-4782 Erwitte (DE)
(74) Vertreter: Le Vrang, Klaus

(56) Entgegenhaltungen:
- EP-A- 0 148 308
- FR-A- 2 544 389
- GB-A- 2 193 530
- US-A- 4 357 919

## Beschreibung

Die Erfindung betrifft ein Verfahren zum Betreiben einer klopfgeregelten, fremdgezündeten Brennkraftmaschine gemäß dem Oberbegriff des Anspruchs 1.

In klopfgeregelten Brennkraftmaschinen wird der Klopfsensor auf seine Funktionsfähigkeit hin überwacht, da bei Ausfall eines Klopfsensors die Gefahr besteht, daß der Zündzeitpunkt in Richtung früh auf einen Wert verstellt wird, der zu Funktionsstörungen und zur Zerstörung der Brennkraftmaschine führt. Ähnlich stellt sich die Situation dar, wenn die Klopfregelung bei einer aufladbaren Brennkraftmaschine auf den Ladedruck wirkt.

Um eine derartige Betriebsweise, die in Kürze die Zerstörung der Brennkraftmaschine herbeiführt, zu vermeiden, werden die entsprechenden Betriebsparameter, wie Zündzeitpunkt oder Ladedruck, im Rahmen einer Steuerung so eingestellt, daß ein Klopfen auf jeden Fall vermieden wird. Diese Steuerung findet statt in den Bereichen, in denen ein Klopfen überhaupt auftreten kann, also bei erhöhter Lastanforderung oder bei höheren Drehzahlen. Damit wird in Kauf genommen, daß die Brennkraftmaschine nicht optimal, also nahe an ihrer Klopfgrenze, betrieben wird, und dementsprechend weder leistungs- noch abgasoptimiert eingesetzt ist, jedoch dafür funktionsfähig bleibt.

Ein Nachteil unter derartigen Betriebsbedingungen ist jedoch, daß bei einer Betriebsweise, die aus nicht klopfgefährdeten Bereichen in klopfgefährdete Bereiche hinübergeht, eine plötzliche Verstellung des Zündzeitpunktes stattfindet und somit ein Momentensprung auftritt. Dies wird z. B. deutlich, wenn aus niedrigen Last- oder Drehzahlbereichen heraus die Brennkraftmaschine beschleunigt wird.

Ein weiteres Problem stellt die Situation dar, wo ein schadhafter Klopfsensor plötzlich wieder seinen Betrieb aufnimmt, wodurch die Brennkraftmaschine von der gesteuerten Zündzeitpunkteinstellung auf eine geregelte, nahe der Klopfgrenze optimierte Betriebsweise umgestellt werden kann. Auch hierbei wird es durch den plötzlichen Wechsel des Zündzeitpunktes zu einer vom Fahrer subjektiv als unangenehm empfundenen Betriebsweise kommen.

Aus der DE-A 34 45 177 ist es bekannt, den Zündzeitpunkt bei Ausfall des Klopfsensors durch einen entsprechenden Ausfallschutzgleichrichter plötzlich in Richtung spät zu verstellen, um einen klopfenden Betrieb zuverlässig zu vermeiden. Diese Verstellung geschieht sprungartig auf einen Festwert.

Aus der DE-A 33 13 036 ist es bekannt, eine Klopfregelung vorzusehen, die stufenförmig inkrementell verstellt, die jedoch bei plötzlichen Betriebsänderungen, wie z. B. bei Beschleunigungen, mit schnellerer Regelkonstante betrieben wird.

Schließlich beschreibt die DE-A 35 45 809 eine Klopfregelung, bei der eine Grobkorrektur mit schnellen Änderungssprüngen mit einer Feinkorrektur überlagert wird.

In der Praxis zeigt sich, daß bei der Überwachung der Klopfsensoren und bei .Ausfall des Klopfsensors, der häufig nur kurzzeitig ist, es bei Verstellen auf einen Festwert zu sehr starken Momentensprüngen kommt, die bis zu Fahrfehlern führen.

Aufgabe der Erfindung ist es, bei einer Brennkraftmaschine mit gestörtem Klopfregelverhalten die Momentensprünge zu vermeiden.

Die Aufgabe wird gelöst durch den Hauptanspruch.

Erfindungsgemäß ist vorgesehen, daß die Verstellungen des Zündzeitpunktes nicht sofort auf einen maximalen Festwert laufen, sondern inkrementell dorthin zurückgefahren werden. Dies bedingt auch, daß bei einem kurzzeitigen Ausfall des Klopfsensors keine sprungartigen Verstellungen zwischen einer extremen Rücknahme des Zündzeitpunktes bis auf den Festwert und ein anschließendes Wiedervorverstellen stattfindet, sondern daß durch das stufenweise Zurücknehmen, daß sofort unterbrochen wird, wenn der Klopfsensor wieder arbeitet, sehr viel weichere Übergänge erzielt werden. Entgegen der früheren Auffassung, die einen Ausfall des Klopfsensors als reinen Notbetrieb angesehen hat, dementsprechend auch Komforteinbußen hingenommen werden können, hat sich herausgestellt, daß keine Maschinenschäden auftreten, wenn der Zündzeitpunkt inkrementell in Richtung spät zurückgenommen wird. Als unerwartet vorteilhaft erweist sich die erfindungsgemäße Lösung insbesondere in den Fällen, wo der Klopfsensor nur kurzzeitig ausfällt und dementsprechend wilde Momentensprünge vermieden werden können, wenn die Verstellungen in Richtung spät und nach Wiederaufnahme des Betriebs des Klopfsensors die Verstellung nach vorne in Richtung früh auf den Kennfeldwert inkrementell vorgenommen wird.

In bevorzugter Weise wird das Verfahren ebenfalls angewendet bei der Verstellung des Zündzeitpunktes aus einem Bereich, in dem die Klopfregelung inaktiviert ist, da die Lastanforderung und dann die Drehzahlanforderung zu niedrig ist, in einem Bereich, in dem üblicherweise eine Klopfregelung stattfindet. In diesem Bereich, der üblicherweise klopfgeregelt ist, also bei höheren Lastanforderungen oder höheren Drehzahlen, findet unter den oben erwähnten Voraussetzungen jedoch lediglich eine Steuerung des Zündzeitpunktes in Richtung spät statt, da die Klopfsensoren bei der Plausibilitätsabfrage keine verwendbaren Werte liefern und somit den Zündzeitpunkt, um eine Frühzündung auf jeden Fall zu vermeiden, mit einem Sicherheitszuschlag in Richtung spät gerückt wird.

Gemäß Unteranspruch 2 wird eine zusätzliche Verbesserung des Betriebsverhaltens sowie eine zusätzliche Sicherheit eingebaut durch einen gewissen Überwachungszeitraum, der abgewartet wird, bis tatsächlich der Klopfsensor als schadhaft definiert wird.

Gemäß Unteranspruch 3 wird der gegebenenfalls auch nur vorübergehende Ausfall des Klopfsensors in einem entsprechenden elektronischen Speicher im Fahrzeug abgespeichert und im Rahmen eines Diagnoseverfahrens ausgegeben, so daß selbst dann, wenn der Klopfsensor inzwischen seine Arbeit wieder aufgenommen hat, beim nächsten Werkstattbesuch eine Überprüfung stattfindet.

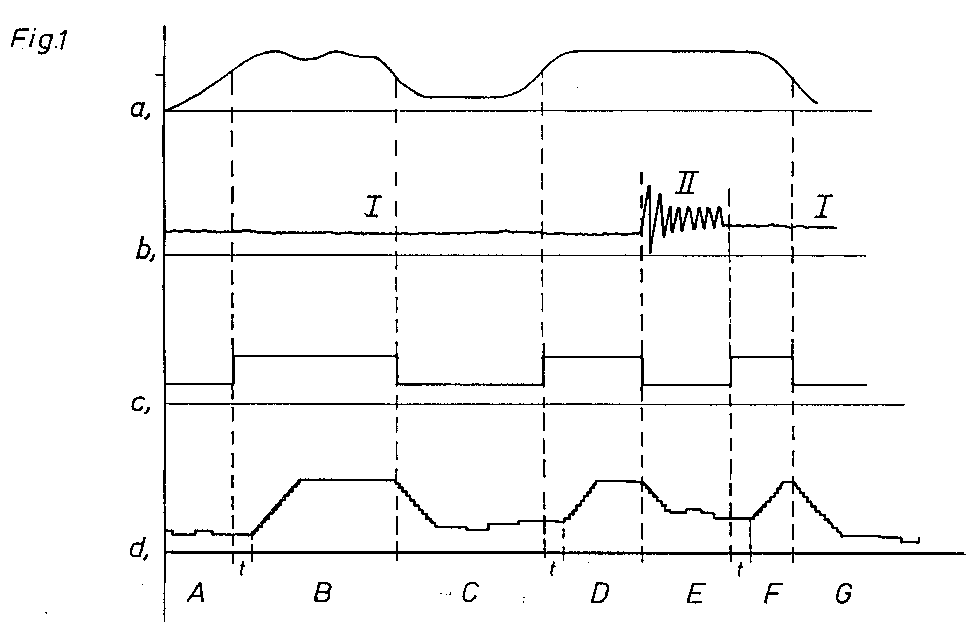

Im folgenden wird die Erfindung anhand der Figur erläutert. Die Figur zeigt in Form von Diagrammen das Zusammenwirken der Betriebsparameter. In Figur 1 a ist entlang einer Zeitachse die Drehzahl der Brennkraftmaschine aufgetragen, wobei für die vorliegende Betrachtung lediglich von Bedeutung ist, daß die Drehzahl um einen Schwellwert schwankt. Unterhalb des Schwellwertes findet keine Klopfregelung statt, da die Drehzahl so niedrig ist, daß ein Klopfen nicht auftritt. Oberhalb der Schwelle kann Klopfen der Brennkraftmaschine auftreten, in diesem Bereich ist die Klopfregelung aktiv.

In Figur a ist als Beispiel lediglich die Drehzahl angeführt, in der Praxis wird zur Diskriminierung der klopfgefährdeten und nicht klopfgefährdeten Betriebszustände zusätzlich die Lastanforderung, beispielsweise durch einen Lastsensor im Saugrohr der Brennkraftmaschine, hinzugezogen werden müssen.

In Figur 1 b ist das Signal des Klopfsensors aufgetragen, wobei im vorliegenden Falle von einem schadhaften Klopfsensor ausgegangen wird. Im Bereich I erzeugt der Klopfsensor kein verwertbares Signal, im Bereich II liefert der Klopfsensor Klopfsignale, die zu einer entsprechenden Regelung des Betriebsparameters wie Zündzeitpunkteinstellung und/oder Ladedruckeinstellung führen.

In Figur 1 c ist das Ausgangssignal einer Ausfallerkennung für den Klopfsensor vorgesehen. In den Bereichen, in denen die Drehzahl unterhalb der Schwelle liegt, ist eine Ausfallerkennung für den Klopfsensor nicht notwendig, da der Klopfsensor ohnehin nicht in den Betriebsablauf der Brennkraftmaschine mit seinem Signal eingreift. In den Bereichen jedoch, in den die Drehzahl über dem Schwellwert liegt, gibt die Ausfallerkennung ein entsprechendes Signal ab, wenn von dem Klopfsensor kein verwertbares Signal erhalten wird.

Den Einfluß auf eine entsprechende Betriebsparametereinstellung, im vorliegenden Fall auf die Einstellung des Zündzeitpunktes, ist in der Figur 1 d dargestellt.

Für diesen als Beispiel dargestellten Betrieb ergibt sich im zeitlichen Anlauf folgendes Bild: Im Bereich A ist die Drehzahl unterhalb des Schwellwertes, der den Beginn eines klopfgefährdeten Betriebsbereiches der Brennkraftmaschine anzeigt. Wie oben erwähnt, gilt gleiches in diesem Falle auch für die Lastanforderung, also die Unterdruckanzeige. Der Klopfsensor gibt, wie Figur 1 b zeigt, im Bereich A kein Signal ab, die Ausfallerkennung ist jedoch nicht aktiv, da ohnehin kein Klopfen auftreten kann, und das Signal des Klopfsensors somit nicht von Interesse ist. Der Zündzeitpunkt wird unabhängig von der Klopfregelung gemäß anderer Betriebsparameter gesteuert.

Im Bereich B hat die Drehzahl den Schwellwert überschritten, hier wird ein Ansprechen des Klopfsensors erwarten, das Signal des Klopfsensors wird entsprechend aufbereitet, um zwischen Klopfen und Nichtklopfen zu unterscheiden. Wie jedoch die Figur 1 b zeigt, liegt kein verwertbares Signal des Klopfsensors vor, somit spricht die Ausfallerkennung gemäß Figur 1 c an und gibt ein Signal ab.

Damit wird der Zündzeitpunkt in Richtung spät gestellt, um auf jeden Fall einen klopfenden Betrieb der Brennkraftmaschine zu vermeiden, dabei wird jedoch in Kauf genommen, daß die Brennkraftmaschine nicht optimiert betrieben ist. Diese Einstellung in Richtung spät findet jedoch nicht sofort mit Auftreten des Singals der Ausfallerkennung statt, sondern setzt erst nach einer gewissen Anzahl von Zündungen ein. Dieser Zeitraum ist mit t angegeben. Um keine schlagartigen Änderungen des Betriebszustandes zu erhalten, wird der Zündzeitpunkt nicht sprungartig auf den Spät-Wert verstellt, sonder steigert sich allmählich auf den zu erreichenden Wert, so daß Sprünge im Betriebsverhalten vermieden werden. Diesen voreingestellten Spätwert behält der Zündzeitpunkt bei, bis im Bereich C die Drehzahl wieder unter den Schwellwert absinkt, somit die Ausfallerkennung kein Signal mehr liefert, da ohnehin das Klopfsensorsignal unbeachtlich ist. Hier geht der Zündzeitpunkt wieder in Werte über, die unabhängig von der Klopfregelung aufgrund anderer Betriebsparameter gewonnen werden. Dieser Übergang findet jedoch nicht schlagartig statt, sondern ebenfalls wieder mit einer allmählichen Einstellung, die bei der üblichen Digitaltechnik inkrementell vorgenommen wird.

Sobald, z. B. im Bereich D, die Drehzahl wieder über den Schwellwert ansteigt, wird der Zündzeitpunkt bei ausgefallenem Klopfsensor wieder auf den Spät-Wert verstellt. Findet nun in diesem Bereich ein plötzliches Einsetzen des Klopfsensors und ein entsprechendes Ausgangssignal statt, kann von der Steuerung auf den voreingestellten Spät-Wert wieder auf Steuerung durch die Klopfregelung eingestellt werden, der Zündzeitpunkt wird in diesem Bereich E durch die Klopfregelung geliefert. Auch dieser Übergang von dem voreingestellten Wert auf den klopfgeregelten Wert findet gleitend statt. Fällt nun während dieses Betriebs der Klopfsensor, wie im Bereich F, erneut aus, wird nach Ablauf des Zeitraumes t, in dem die Überprüfung des Klopfsensors mehrfach wiederholt wird, eine Einstellung des Zündzeitpunktes auf den Sicherheitswert im Bereich spät statt.

Mit G ist abschließend ein Bereich bezeichnet, in dem die Drehzahl wieder unter den Schwellwert fällt, so daß die Klopfregelung die Betriebsparamter wie z. B. den Zündzeitpunkt nicht beeinflußt.

Duch die Erfindung ist es möglich, auch bei Ausfall eines Klopfsensors unangenehme und den Fahrkomfort beeinträchtigende Übergänge zu vermeiden. Dies ermöglicht auch, daß im Gegensatz zu bisherigen Ausfallerkennungsschaltungen für Klopfregelungen der Klopfregelbetrieb während einer Betriebsphase aufgenommen werden kann, sobald der Klopfsensor wieder aktiv ist. Bisherige entsprechende Schaltungen haben dann die Klopfregelung bis zum Abstellen der Zündung stillgelegt, so daß auch ein nur kurzzeitiger Ausfall des Klopfsensors zu einer sich ggf. erstreckenden nachteiligen Betriebsweise geführt hat.

## Patentansprüche

1. Verfahren zum Betreiben einer klopfgeregelten, fremdgezündeten Brennkraftmaschine mit einer Ausfallerkennung für fehlerhafte Klopfsensoren, wobei mindestens in klopfgefährdeten Bereichen bei Ausfall eines Klopfsensors der Zündzeitpunkt in Richtung spät verschoben wird, dadurch gekennzeichnet, daß
- die Verstellung des Zündzeitpunktes bei Ausfall inkrementell durchgeführt wird, und
- bei Wiedervorliegen eines intakten Sensors der Zündzeitpunkt ausgehend von den soeben erreichten Werte inkrementell wieder auf Kennfeldvorgabe vorgestellt wird.

2. Verfahren nach Anspruch 1, dadurch gekennzeichnet, daß vor Verstellung des Zündzeitpunktes zur Vermeidung des Klopfens unter permanenter Überwachung des Klopfsignales ein Zeitraum abgewartet wird.

3. Verfahren nach Anspruch 1 oder 2, dadurch gekennzeichnet, daß der Ausfall des Klopfsensors gespeichert und im Rahmen eines Diagnoseverfahrens abrufbar ist.

## Claims

1. Method for operating an external-ignition internal combustion engine with closed-loop knock control, having a failure recognition system for faulty knock sensors, the ignition timing being displaced in the direction of retarded at least in ranges endangered by knocking when a knock sensor fails, characterized in that
- the adjustment of the ignition timing in the case of a failure is carried out incrementally, and
- when an intact sensor is again present, the ignition timing is adjusted incrementally from the values just reached back to that presented by the characteristic diagram specification.

2. Method according to Claim 1, characterized in that a delay period is observed with permanent monitoring of the knock signal before adjusting the ignition timing to avoid knocking.

3. Method according to Claim 1 or 2, characterized in that the failure of the knock sensor is stored and can be called up as part of a diagnosis method.

## Revendications

1. Procédé pour faire fonctionner une machine à combustion interne et à allumage piloté, avec réglage anti-détonation et détection de panne pour détecteurs de détonation défectueux, selon lequel au moins dans la zone de risque de détonation, en cas de panne d'un détecteur de détonation, le point d'allumage est décalé dans le sens du retard, caractérisé en ce que:
- le décalage du point d'allumage est effectué, en cas de panne, de manière incrémentielle, et
- après remise en place d'un détecteur de détonation intact le point d'allumage est avancé et ramené de manière incrémentielle à sa valeur caractéristique à partir des valeurs obtenues juste auparavant.

2. Procédé selon la revendication 1, caractérisé en ce que, pour éviter la détonation, une temporisation est prévue avant le décalage du point d'allumage, sous surveillance permanente du signal de détonation.

3. Procédé selon la revendication 1 ou 2, caractérisé en ce que la panne du détecteur de détonation est mémorisée et peut être rappelée dans le cadre d'un diagnostic.
